# EUROPÄISCHE PATENTANMELDUNG

(11) **EP 2 063 380 A2**
(43) Veröffentlichungstag der Anmeldung: **27.05.2009**
(21) Anmeldenummer: 08019933.4
(22) Anmeldetag: 14.11.2008
(51) Int. Cl.: G06K 7/00

(54) **Kommunikationsgerät zur kontaktlosen Datenübertragung über ein Nahfeld**

(30) Priorität: 23.11.2007 DE 102007056429
(71) Anmelder: Giesecke & Devrient GmbH, 81677 München (DE)
(72) Erfinder: Finkenzeller, Klaus, 85774 Unterföhring (DE); Schiller, Christoph, Dr., 81827 München (DE)

(57) **Zusammenfassung**

Die Erfindung betrifft ein Kommunikationsgerät (1) zur kontaktlosen Datenübertragung über ein Nahfeld. Das erfindungsgemäße Kommunikationsgerät (1) verfügt über einen ersten Betriebsmodus, in dem es eine erste Ein-gangsempfindlichkeit für den Empfang von Signalen aufweist, die über das Nahfeld übertragenen werden. Die Besonderheit des erfindungsgemäßen Kommunikationsgeräts (1) besteht darin, dass es über einen zweiten Betriebsmodus verfügt, in dem es eine gegenüber der ersten Eingangsempfindlichkeit erhöhte zweite Eingangsempfindlichkeit für den Empfang von Signalen aufweist, die über das Nahfeld übertragenen werden.

## Beschreibung

Die Erfindung betrifft ein Kommunikationsgerät zur kontaktlosen Datenübertragung über ein Nahfeld. Weiterhin betrifft die Erfindung ein System mit wenigstens zwei Kommunikationsgeräten und ein Verfahren zur kontaktlosen Datenübertragung zwischen zwei Kommunikationsgeräten.

Unter einem Kommunikationsgerät im Sinne der Erfindung ist ein Gerät zu verstehen, das in der Lage ist, kontaktlos, d. h. nicht über eine galvanische Verbindung, Daten an einen Kommunikationspartner zu senden oder Daten von einem Kommunikationspartner zu empfangen.

Derartige Kommunikationsgeräte sind bereits in vielfältigen Ausführungsformen bekannt, die beispielsweise hinsichtlich der verwendeten Übertragungstechnik unterschieden werden können. Insbesondere können je nach Anwendungsgebiet Übertragungstechniken mit unterschiedlichen Reichweiten und unterschiedlichen Datenraten eingesetzt werden. Für vergleichsweise kurze Reichweiten von typischerweise ca. 10 cm bis 20 cm kann die Nahfeldkommunikation eingesetzt werden, die auch als Near Field Communication, kurz NFC, bezeichnet wird. Dabei kann beispielsweise eine induktive Kopplung der Kommunikationsgeräte gemäß der Norm ISO/IEC 14443 erfolgen. Diese Norm sieht eine Energie- und Datenübertragung mit Hilfe eines magnetischen Wechselfelds der Frequenz 13,56 MHz vor.

Insbesondere bei einer sehr kostengünstigen Ausbildung wenigstens eines der an der Kommunikation beteiligten Kommunikationsgeräte kann es schwierig sein, eine gewünschte Kommunikationsreichweite zu erzielen. Diesbezüglich ist aus der WO 03/079305 A1 ein System zur Erhöhung der Kopplungseffizienz zwischen einem integrierten Schaltkreis und einer Basisstation bekannt. Im integrierten Schaltkreis ist ein erster Schwingkreis ausgebildet. Ein zweiter Schwingkreis, der vom ersten Schwingkreis galvanisch getrennt ist, ist in der Nähe des ersten Schwingkreises angeordnet, so dass eine gute Feldkopplung zwischen dem ersten Schwingkreis und dem zweiten Schwingkreis vorliegt. Der zweite Schwingkreis ist weiterhin für eine gute Feldkopplung mit der Basisstation ausgelegt. Die von der Basisstation erzeugten Felder koppeln in den zweiten Schwingkreis ein. Dies hat zur Folge, dass vom zweiten Schwingkreis Felder erzeugt werden, die wiederum in den ersten Schwingkreis einkoppeln.

Der Erfindung liegt die Aufgabe zugrunde, eine erhöhte Übertragungsreichweite zwischen Nahfeld-Kommunikationsgeräten zu ermöglichen.

Diese Aufgabe wird durch ein Kommunikationsgerät mit der Merkmalskombination des Anspruchs 1, durch ein System gemäß Anspruch 8 und durch ein Verfahren gemäß Anspruch 13 gelöst.

Das erfindungsgemäße Kommunikationsgerät zur kontaktlosen Datenübertragung über ein Nahfeld verfügt über einen ersten Betriebsmodus, in dem es eine erste Eingangsempfindlichkeit für den Empfang von Signalen aufweist, die über das Nahfeld übertragenen werden. Die Besonderheit des erfindungsgemäßen Kommunikationsgeräts besteht darin, dass es über einen zweiten Betriebsmodus verfügt, in dem es eine gegenüber der ersten Eingangsempfindlichkeit erhöhte zweite Eingangsempfindlichkeit für den Empfang von Signalen aufweist.

Dies bedeutet, dass das Kommunikationsgerät im zweiten Betriebsmodus Signale empfangen kann, deren Signalstärke geringer ist als eine für einen Empfang im ersten Betriebsmodus erforderliche Mindestsignalstärke.

Die Erfindung hat den Vorteil, dass auch bei weit entfernten Signalquellen, die am Ort des Kommunikationsgeräts nur eine schwache Signalstärke generieren, noch ein Empfang durch das Kommunikationsgerät möglich ist. Zudem ist eine störungsfreie und zuverlässige Kommunikation im ersten Betriebszustand bei ausreichend hohen Signalstärken sichergestellt.

Das Kommunikationsgerät kann einen Empfangsverstärker zur Verstärkung der empfangenen Signale aufweisen, der im ersten Betriebsmodus deaktiviert und im zweiten Betriebsmodus aktiviert ist. Auf diese Weise ist die Realisierung der beiden Betriebsmodi mit einem vergleichsweise geringen Aufwand möglich. Weiterhin kann das Kommunikationsgerät eine Antenne aufweisen, die für beide Betriebsmodi einsetzbar ist. Auch diese Maßnahme trägt dazu bei, den Aufwand gering zu halten.

Im zweiten Betriebsmodus kann das Kommunikationsgerät eine gegenüber dem ersten Betriebsmodus wenigstens vordoppelte, vorzugsweise wenigstens vervierfachte, Eingangsempfindlichkeit aufweisen. Insbesondere kann das Kommunikationsgerät im ersten Betriebsmodus eine gemäß der Norm ISO/IEC 14443 vorgegebene Eingangsempfindlichkeit aufweisen.

Die Datenübertragung erfolgt vorzugsweise über ein magnetisches Wechselfeld. Magnetische Wechselfelder können mit vergleichsweise geringem Aufwand erzeugt werden, ermöglichen eine zuverlässige Datenübertragung und sind mit den Rahmenbedingungen einer Vielzahl von Anwendungen kompatibel. Insbesondere kann das Kommunikationsgerät gemäß einer Norm für RFID-Geräte ausgebildet sein, um die Kompatibilität mit derartigen Geräten sicherzustellen.

Die Erfindung betrifft weiterhin ein Kommunikationssystem mit einem ersten Kommunikationsgerät, das in der vorstehend beschriebenen Weise ausgebildet sein kann und einem zweiten Kommunikationsgerät. Das zweite Kommunikationsgerät ist als ein aktiver Sender betreibbar, der ein Feld erzeugt und über das erzeugte Nah- oder Fernfeld Signale sendet.

Dies hat den Vorteil, dass das zweite Kommunikationsgerät auch dann noch Daten an das erste Kommunikationsgerät übermitteln kann, wenn es relativ weit vom ersten Kommunikationsgerät entfernt ist.

Weiterhin kann vorgesehen sein, dass das zweite Kommunikationsgerät als passiver Sender betreibbar ist, der das vom ersten Kommunikationsgerät erzeugte Nahfeld moduliert. Dies hat den Vorteil, dass das zweite Kommunikationssystem mit dieser bei RFID-Geräten weit verbreiteten Übertragungsart kompatibel ist. Insbesondere kann das zweite Kommunikationsgerät als ein portables Gerät ausgebildet sein.

Im ersten Betriebsmodus des ersten Kommunikationsgeräts wird vorzugsweise eine bidirektionale Datenübertragung zwischen den Kommunikationsgeräten durchgeführt. Im zweiten Betriebsmodus des ersten Kommunikationsgeräts wird vorzugsweise eine unidirektionale Datenübertragung vom zweiten Kommunikationsgerät zum ersten Kommunikationsgerät durchgeführt.

Beim erfindungsgemäßen Verfahren zur kontaktlosen Datenübertragung zwischen einem ersten Kommunikationsgerät und einem zweiten Kommunikationsgerät über ein Nahfeld wird das erste Kommunikationsgerät in einem ersten Betriebsmodus betrieben, wenn sich das zweite Kommunikationsgerät innerhalb eines primären Ansprechbereichs befindet. Das erfindungsgemäße Verfahren zeichnet sich dadurch aus, dass das erste Kommunikationsgerät in einem zweiten Betriebsmodus betrieben wird, in dem das erste Kommunikationsgerät eine gegenüber dem ersten Betriebsmodus erhöhte Eingangsempfindlichkeit aufweist, wenn sich das zweite Kommunikationsgerät innerhalb eines sekundären Ansprechbereichs befindet.

Auf diese Weise kann abhängig von der Position des zweiten Kommunikationsgeräts relativ zum ersten Kommunikationsgerät jeweils der optimale Betriebsmodus zum Einsatz kommen.

Insbesondere kann zwischen den Kommunikationsgeräten eine bidirektionale Datenübertragung durchgeführt werden, wenn sich das zweite Kommunikationsgerät innerhalb des primären Ansprechbereichs befindet. Weiterhin kann zwischen den Kommunikationsgeräten eine unidirektionale Datenübertragung durchgeführt werden, wenn sich das zweite Kommunikationsgerät innerhalb des sekundären Ansprechbereichs befindet.

Das zweite Kommunikationsgerät kann innerhalb des primären Ansprechbereichs und innerhalb des sekundären Ansprechbereichs auf unterschiedliche Weise betrieben werden. Insbesondere kann das zweite Kommunikationsgerät innerhalb des primären Ansprechbereichs in passiver Weise betrieben werden, wobei es seine Versorgungsspannung aus dem vom ersten Kommunikationsgerät erzeugten Nahfeld bezieht und/oder Daten durch Modulation des vom ersten Kommunikationsgerät erzeugten Nahfeldes sendet. Weiterhin kann das zweite Kommunikationsgerät innerhalb des sekundären Ansprechbereichs in aktiver Weise betrieben werden, wobei es Daten über ein von ihm erzeugtes Feld übermittelt. Dies bedeutet, dass der aktive Betrieb vorzugsweise dann zum Einsatz kommt, wenn ein passiver Betrieb nicht möglich ist.

Weiterhin ist es vorteilhaft, wenn vom ersten Kommunikationsgerät wenigstens zeitweise wiederholt ein Signal gesendet wird, um festzustellen, ob sich das zweite Kommunikationsgerät innerhalb des primären Ansprechbereichs befindet. Ebenso kann vom zweiten Kommunikationsgerät wenigstens zeitweise wiederholt ein Signal gesendet werden, um festzustellen, ob sich das zweite Kommunikationsgerät innerhalb des sekundären Ansprechbereichs befindet. Diese Informationen ermöglichen es, die beiden Kommunikationsgeräte jeweils angepasst an den tatsächlichen Gegebenheiten zu betreiben.

Zwischen den Kommunikationsgeräten kann eine Authentisierung durchgeführt werden, während sich das zweite Kommunikationsgerät innerhalb des primären Ansprechbereichs befindet. Außerdem kann eine Benutzereingabe in das zweite Kommunikationsgerät durchgeführt werden, während sich das zweite Kommunikationsgerät innerhalb des sekundären Ansprechbereichs befindet. Da der sekundäre Ansprechbereich in der Regel deutlich größer als der primäre Ansprechbereich ist, kann auf diese Weise die Benutzereingabe sehr komfortabel gestaltet werden. Beispielsweise kann das zweite Kommunikationsgerät für die Benutzereingabe in die Hand genommen werden. Nach der Benutzereingabe kann das zweite Kommunikationsgerät vom sekundären Ansprechbereich in den primären Ansprechbereich verbracht werden. Dann können von der Benutzereingabe abhängige Daten vom zweiten Kommunikationsgerät an das erste Kommunikationsgerät übermittelt werden. Dies hat den Vorteil, dass bei der Datenübertragung ein hoher Sicherheitsstandard gewährleistet werden kann, da bei der Datenübertragung innerhalb des primären Ansprechbereichs umfangreiche Sicherheitsmaßnahmen getroffen werden können.

Im Rahmen des erfindungsgemäßen Verfahrens ist es weiterhin möglich, dass vom ersten Kommunikationsgerät die Anwesenheit des zweiten Kommunikationsgeräts im sekundären Ansprechbereich überwacht wird und bei Entfernen des zweiten Kommunikationsgeräts aus dem sekundären Ansprechbereich vorgegebene Maßnahmen eingeleitet werden. Ebenso ist es möglich, dass vom zweiten Kommunikationsgerät Steuerdaten an das erste Kommunikationsgerät übermittelt werden, während sich das zweite Kommunikationsgerät innerhalb des sekundären Ansprechbereichs befindet. Auf diese Weise kann zum Beispiel eine Fernsteuerung einer an das erste Kommunikationsgerät angeschlossenen Maschine realisiert werden.

Die Erfindung wird nachstehend anhand der in der Zeichnung dargestellten Ausführungsbeispiele erläutert.

Es zeigen:
- Fig. 1: ein Ausführungsbeispiel des erfindungsgemäßen Systems in ei- nem ersten Betriebszustand in einer schematischen Darstellung,
- Fig. 2: das Ausführungsbeispiel des erfindungsgemäßen Systems im zweiten Betriebszustand in einer schematischen Darstellung,
- Fig. 3: eine schematische Darstellung des erfindungsgemäßen Systems, wobei die Position des zweiten Kommunikationsgeräts relativ zum ersten Kommunikationsgerät variiert und
- Fig. 4: einen Ausschnitt aus dem Übertragungsprotokoll für die Daten- übertragung zwischen den beiden Kommunikationsgeräten für die in Fig. 3 dargestellten Positionen des zweiten Kommunikati- onsgeräts relativ zum ersten Kommunikationsgerät.

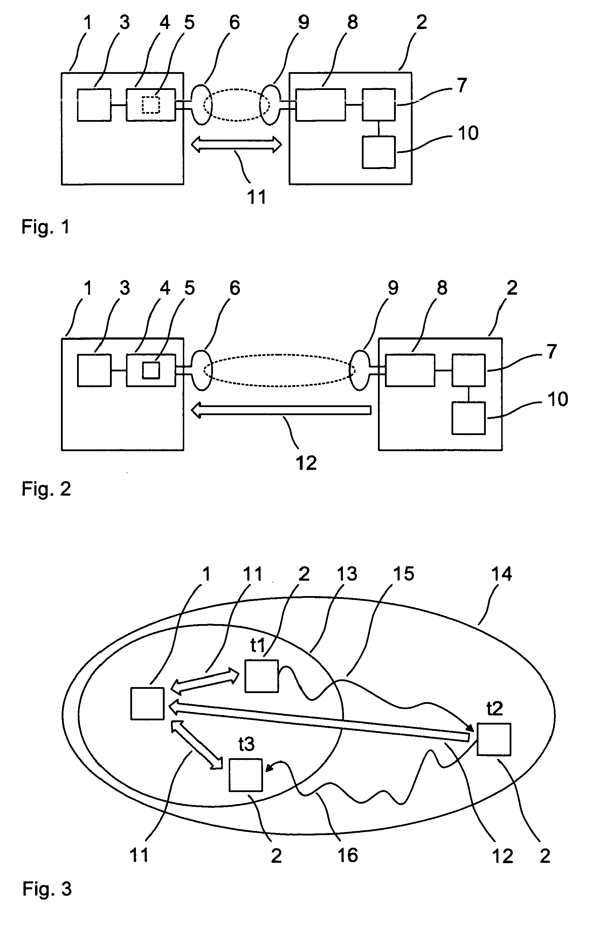

Fig. 1 zeigt ein Ausführungsbeispiel für das erfindungsgemäße System in einem ersten Betriebszustand in einer schematischen Darstellung. Das erfindungsgemäße System weist ein erstes Kommunikationsgerät 1 und ein zweites Kommunikationsgerät 2 auf. Bei dem ersten Kommunikationsgerät 1, das vorzugsweise ortsfest eingerichtet ist, kann es sich beispielsweise um ein RFID-Lesegerät oder um ein NFC-Gerät handeln. RFID steht für Radio Frequency Identification, d. h. RFID-Geräte können für Identifikationsanwendungen eingesetzt werden und arbeiten mit Radiowellen. NFC ist eine Abkürzung für Near Field Communication und bezeichnet eine kontaktlose Kommunikation im Nahfeldbereich.

Das erste Kommunikationsgerät 1 weist eine erste Geräteelektronik 3 auf, die mit einer ersten Schnittstelle 4 verbunden ist. Die erste Geräteelektronik 3 kann beispielsweise als ein Mikroprozessor ausgebildet sein, der mittels eines Betriebssystems betrieben wird. Die erste Schnittstelle 4 kann als ein RFID-Modul oder als ein NFC-Modul ausgebildet sein und weist einen Empfangsverstärker 5 auf, der wahlweise aktiviert und deaktiviert werden kann und der Erhöhung der Empfangsempfindlichkeit der ersten Schnittstelle 4 dient. In dem in Fig. 1 dargestellten ersten Betriebszustand ist der Empfangsverstärker 5 deaktiviert und deshalb gestrichelt dargestellt. An die erste Schnittstelle 4 ist eine erste Antenne 6 angeschlossen, mit deren Hilfe Signale kontaktlos gesendet und empfangen werden können. Die erste Antenne 6 ist beispielsweise als eine Leiterschleife oder eine Spule ausgebildet.

Bei dem zweiten Kommunikationsgerät 2 kann es sich um ein intelligentes Gerät handeln, das vorzugsweise beweglich ausgebildet ist. Beispielsweise handelt es sich bei dem zweiten Kommunikationsgerät 2 um ein Mobilfunktelefon. Das zweite Kommunikationsgerät 2 weist eine zweite Geräteelektronik 7 auf, die mit einer zweiten Schnittstelle 8 verbunden ist. An die zweite Schnittstelle 8 ist eine zweite Antenne 9 angeschlossen. Weiterhin weist das zweite Kommunikationsgerät 2 eine Software 10 auf, durch die im Folgenden noch näher beschriebene Funktionalitäten bereitgestellt werden. Analog zur ersten Geräteelektronik 3 kann auch die zweite Geräteelektronik 7 als ein Mikroprozessor ausgebildet sein. Die zweite Schnittstelle 8 kann beispielsweise als ein NFC-Modul ausgebildet sein. Die zweite Antenne 9 kann in gleicher Weise realisiert sein wie die erste Antenne 6.

Alternativ zu der vorstehend erwähnten Ausbildung als ein Mobilfunktelefon kann das zweite Kommunikationsgerät 2 auch als ein RFID-Lesegerät oder als ein aktiver Transponder ausgebildet sein. Ein aktiver Transponder verfügt über eine interne Energiequelle und benötigt daher für die Signalübertragung keine externe Energieeinspeisung.

Das zweite Kommunikationsgerät 2 ist in dem in Fig. 1 dargestellten ersten Betriebszustand in der Lage, aus einem vom ersten Kommunikationsgerät 1 erzeugten Nahfeld ausreichender Feldstärke seine Betriebsspannung zu generieren. Bei dem Nahfeld kann es sich beispielsweise um ein magnetisches Wechselfeld insbesondere der Frequenz 13,56 MHz handeln. Außerdem kann das zweite Kommunikationsgerät 2 über das Nahfeld Signale empfangen und ist in der Lage, das Nahfeld zu modulieren und dadurch Signale zu senden. Wie durch einen Doppelpfeil 11 in Fig. 1 angedeutet, der einen bidirektionalen Datenstrom repräsentiert, kann im ersten Betriebszustand eine bidirektionale Kommunikation zwischen den beiden Kommunikationsgeräten 1 und 2 durchgeführt werden. Die Kommunikation kann mittels Lastmodulation abgewickelt werden, wobei das zweite Kommunikationsgerät 2 passiv betrieben werden kann, d. h. seine Energie aus dem vom ersten Kommunikationsgerät 1 erzeugten Feld bezieht. Insbesondere kann eine Kommunikation gemäß der Norm ISO/IEC 14443 oder ISO/IEC 18092 oder einem anderen RFID-Standard durchgeführt werden.

Weiterhin ist das zweite Kommunikationsgerät 2 in einem zweiten Betriebszustand in der Lage, aktiv Signale zu senden. Hierfür ist es nicht erforderlich, dass das zweite Kommunikationsgerät 2 innerhalb eines vom ersten Kommunikationsgerät 1 erzeugten Nahfelds ausreichender Feldstärke angeordnet ist. Die Kommunikation im zweiten Betriebszustand ist in Fig. 2 dargestellt.

Fig. 2 zeigt das Ausführungsbeispiel des erfindungsgemäßen Systems im zweiten Betriebszustand in einer schematischen Darstellung. Der zweite Betriebszustand zeichnet sich dadurch aus, dass das zweite Kommunikationsgerät 2 aktiv Signale sendet und dadurch eine unidirektionale Datenübertragung vom zweiten Kommunikationsgerät 2 zum ersten Kommunikationsgerät 1 durchgeführt wird. Dies ist in Fig. 2 durch einen Pfeil 12 veranschaulicht.

Wenn die zweite Schnittstelle 8 als ein NFC-Modul ausgebildet ist, kann ein aktives Senden eines Signals beispielsweise dadurch erfolgen, dass die zweite Schnittstelle 8 in einem Betriebsmodus "being reader" oder "peer to peer" betrieben wird. Näheres zu diesen Betriebsmodi ist in der DE 10 2004 031 092 A1 offenbart. Das aktive Senden des Signals wird durch die im zweiten Kommunikationsgerät 2 implementierte Software 10 ermöglicht.

Im zweiten Betriebszustand ist der Empfangsverstärker 5 des ersten Kommunikationsgeräts 1 aktiviert, so dass die erste Schnittstelle 4 eine gegenüber dem ersten Betriebszustand erhöhte Eingangsempfindlichkeit aufweist und somit Empfangssignale verarbeiten kann, die eine geringere Signalstärke aufweisen als für die Verarbeitung der Signale im ersten Betriebszustand erforderlich ist. Beispielsweise kann die Aktivierung des Empfangsverstärkers 5 zur Folge haben, dass die erste Schnittstelle 4 auch noch weit unterhalb des normgemäßen Mindestwerts für die Stärke der Lastmodulation zuverlässig arbeitet. Insbesondere wird die Empfindlichkeit der ersten Schnittstelle 4 durch Aktivierung des Empfangsverstärkers 5 wenigstens verdoppelt, vorzugsweise sogar wenigstens vervierfacht, so dass ein zuverlässiger Empfang durch die erste Schnittstelle 4 auch noch bei weniger als der Hälfte bzw. einem Viertel der Signalstärke möglich ist, die für einen zuverlässigen Empfang bei deaktiviertem Empfangsverstärker 5 benötigt wird. Durch geeignete Wahl des Empfangsverstärkers 5 kann auch eine Empfindlichkeitssteigerung um den Faktor 10 bis 1000 erreicht werden. Der Empfangsverstärker 5 ist in Fig. 2 mit einer durchgezogenen Linie dargestellt, um kenntlich zu machen, dass er aktiviert ist. Durch den Pfeil 12 ist angedeutet, dass im zweiten Betriebszustand eine unidirektionale Datenübertragung vom zweiten Kommunikationsgerät 2 zum ersten Kommunikationsgerät 1 durchgeführt wird.

Bei der in Fig. 2 dargestellten Anordnung ist die Entfernung zwischen den Kommunikationsgeräten 1 und 2 so groß, dass das zweite Kommunikationsgerät 2 nicht in der Lage ist, vom ersten Kommunikationsgerät 1 ausgesendete Signale zu empfangen und die für seinen Betrieb benötigte Energie aus dem Feld zu beziehen, das vom ersten Kommunikationsgerät 1 erzeugt wird. Für den Betrieb des zweiten Kommunikationsgeräts 2 wird somit eine sonstige Energiequelle wie beispielsweise eine Batterie, benötigt.

Fig. 3 zeigt eine schematische Darstellung des erfindungsgemäßen Systems, wobei die Position des zweiten Kommunikationsgeräts 2 relativ zum ersten Kommunidationsgerät 1 variiert Zusätzlich zu den beiden Kommunikationsgeräten 1 und 2 sind in Fig. 3 ein primärer Ansprechbereich 13 und ein sekundärer Ansprechbereich 14 dargestellt. Der primäre Ansprechbereich 13 ist als ein Gebiet um das erste Kommunikationsgerät 1 definiert, innerhalb dessen eine bidirektionale Datenübertragung zwischen den beiden Kommunikationsgeräten 1 und 2 möglich ist. Der sekundäre Ansprechbereich 14 ist als ein Gebiet um das erste Kommunikationsgerät 1 definiert, innerhalb dessen eine unidirektionale Datenübertragung vom zweiten Kommunikationsgerät 2 zum ersten Kommunikationsgerät 1 möglich ist.

Zu einem Zeitpunkt t1 befindet sich das zweite Kommunikationsgerät 2 innerhalb des primären Ansprechbereichs 13. Demgemäß ist zum Zeitpunkt t1 eine bidirektionale Datenübertragung zwischen den beiden Kommunikationsgeräten 1 und 2 möglich. Dies ist durch den Doppelpfeil für den bidirektionalen Datenstrom 11 dargestellt. Das zweite Kommunikationsgerät 2 kann dabei passiv betrieben werden und seine Energie aus dem vom ersten Kommunikationsgerät 1 erzeugten Feld beziehen. Nach dem Zeitpunkt t1 wird das zweite Kommunikationsgerät 2 bis zu einem Zeitpunkt t2 entlang einer ersten Trajektorie 15 bewegt und verlässt dabei den primären Ansprechbereich 13.

Zum Zeitpunkt t2 ist das zweite Kommunikationsgerät 2 außerhalb des primären Ansprechbereichs 13, aber immer noch innerhalb des sekundären Ansprechbereichs 14 angeordnet. Demgemäß ist zum Zeitpunkt t2 keine bidirektionale Datenübertragung zwischen den beiden Kommunikationsgeräten 1 und 2 mehr möglich, da das zweite Kommunikationsgerät 2 die Signale des ersten Kommunikationsgeräts 1 nicht empfangen kann. Das erste Kommunikationsgerät 1 kann jedoch die Signale des zweiten Kommunikationsgeräts 2 empfangen. Somit ist zum Zeitpunkt t2 eine unidirektionale Datenübertragung vom zweiten Kommunikationsgerät 2 zum ersten Kommunikationsgerät 1 möglich. Hierzu muss das zweite Kommunikationsgerät 2 aktiv betrieben werden, da keine ausreichende Feldstärke für einen passiven Betrieb zur Verfügung steht. Die unidirektionale Datenübertragung ist durch den Pfeil für den unidirektionalen Datenstrom 12 vom zweiten Kommunikationsgerät 2 zum ersten Kommunikationsgerät 1 dargestellt. Nach dem Zeitpunkt t2 wird das zweite Kommunikationsgerät 2 bis zum Zeitpunkt t3 entlang einer zweiten Trajektorie 16 bewegt und dabei wieder in den primären Ansprechbereich 13 gebracht.

Zum Zeitpunkt t3 ist das zweite Kommunikationsgerät 2 innerhalb des primären Ansprechbereichs 13 angeordnet. Demgemäß ist zum Zeitpunkt t3 eine bidirektionale Datenübertragung zwischen den beiden Kommunikationsgeräten 1 und 2 möglich, die in gleicher Weise wie zum Zeitpunkt t1 abgewickelt werden kann.

Insgesamt ergibt sich somit aus Fig. 3, dass bei einer Variation der Position des zweiten Kommunikationsgeräts 2 relativ zum ersten Kommunikationsgerät 1 jeweils eine bidirektionale Datenübertragung ausgeführt wird, wenn sich das zweite Kommunikationsgerät 2 innerhalb des primären Ansprechbereichs 13 befindet und eine unidirektionale Datenübertragung durchgeführt wird, wenn sich das zweite Kommunikationsgerät 2 innerhalb des sekundären Ansprechbereichs 14 befindet. In Tabelle 1 sind einige mögliche Betriebsarten für die beiden Kommunikationsgeräte 1 und 2 in den beiden Ansprechbereichen 13 und 14 dargestellt.

**Tabelle 1**

| **Betriebsart der Kommunikationsgeräte 1 und 2** | **Primärer Ansprechbereich 13** | **Sekundärer Ansprechbereich 14** |
|---|---|---|
| 1: RFID-Lesegerät oder | X | - |
| NFC "being reader" | | |
| 2: Lastmodulation oder | | |
| NFC "being card" | | |
| 1: RFID-Lesegerät oder | X | X |
| NFC "being reader" | | |
| 2: Aktiver Transponder | | |
| 1, 2: NFC "peer to peer" | X | X |
| 1: NFC "being card" | X | X |
| 2: NFC "being reader" | | |

Wenn das erste Kommunikationsgerät 1 als RFID-Lesegerät oder als NFC-Gerät im Modus "being reader" betrieben wird und das zweite Kommunikationsgerät 2 per Lastmodulation oder als NFC-Gerät im Modus "being card" betrieben wird, ist gemäß Tabelle 1 lediglich innerhalb des primären Ansprechbereichs 13 eine Datenübertragung möglich. Im sekundären Ansprechbereich 14 ist unter diesen Bedingungen keine Datenübertragung zwischen den beiden Kommunikationsgeräten 1 und 2 möglich.

Wird das zweite Kommunikationsgerät 2 dagegen als ein aktiver Transponder betrieben (beispielsweise gemäß der DE 10 2004 031 092 A1), so ist auch innerhalb des sekundären Ansprechbereichs 14 eine Datenübertragung möglich, und zwar eine unidirektionale Datenübertragung vom zweiten Kommunikationsgerät 2 zum ersten Kommunikationsgerät 1.

Werden beide Kommunikationsgeräte 1 und 2 als NFC-Geräte im Modus "peer to peer" betrieben, so ist innerhalb des primären Ansprechbereichs 13 eine bidirektionale Datenübertragung zwischen den Kommunikationsgeräten 1 und 2 und innerhalb des sekundären Ansprechbereichs 14 eine unidirektionale Datenübertragung vom zweiten Kommunikationsgerät 2 zum ersten Kommunikationsgerät 1 möglich.

Die gleichen Kommunikationsmöglichkeiten bestehen auch, wenn das zweite Kommunikationsgerät 2 als NFC-Gerät im Modus "being reader" und das erste Kommunikationsgerät 1 als NFC-Gerät im Modus "being card" mit erhöhter Empfindlichkeit betrieben werden.

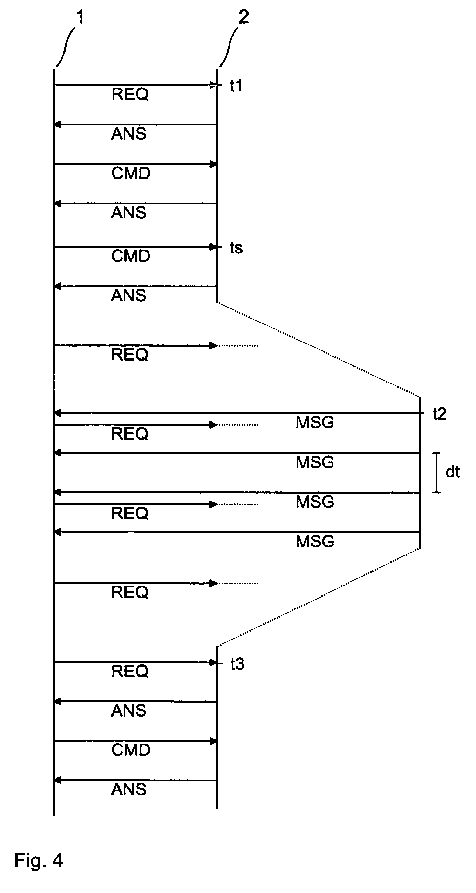

Fig. 4 zeigt einen Ausschnitt aus dem Übertragungsprotokoll für die Datenübertragung zwischen den beiden Kommunikationsgeräten 1 und 2 für die in Fig. 3 dargestellten Positionen des zweiten Kommunikationsgeräts 2 relativ zum ersten Kommunikationsgerät 1. Das erste Kommunikationsgerät 1 ist in der Darstellung der Fig. 4 auf der linken Seite angeordnet. Das zweite Kommunikationsgerät 2 ist in der Darstellung der Fig. 4 in unterschiedlichen Positionen rechts vom ersten Kommunikationsgerät 1 angeordnet. Die übermittelten Daten sind jeweils durch Pfeile zwischen den beiden Kommunikationsgeräten 1 und 2 veranschaulicht, wobei die Orientierung der Pfeile jeweils der Richtung der Datenübertragung entspricht.

Damit das zweite Kommunikationsgerät 2 erkennen kann, ob es sich innerhalb des primären Ansprechbereichs 13 befindet, sendet das erste Kommunikationsgerät 1 in zyklischen Abständen eine Anfrage REQ aus. Zum Zeitpunkt t1 befindet sich das zweite Kommunikationsgerät 2 innerhalb des primären Ansprechbereichs 13 und kann somit die Anfrage REQ des ersten Kommunikationsgeräts 1 empfangen. Demgemäß sendet das zweite Kommunikationsgerät 2 eine Antwort ANS aus. Die Antwort ANS wird vom ersten Kommunikationsgerät 1 empfangen, das die auf diese Weise eingeleitete bidirektionale Datenübertragung mit dem Aussenden eines Kommandos CMD fortsetzt. Das Kommando CMD wird vom zweiten Kommunikationsgerät 2 empfangen und mit einer Antwort ANS beantwortet. Auf diese Weise können noch weitere Kommandos CMD und Antworten ANS zwischen den Kommunikationsgeräten 1 und 2 übertragen werden. Beispielsweise kann im Rahmen dieser Datenübertragung eine gegenseitige Authentisierung der beiden Kommunikationsgeräte 1 und 2 durchgeführt werden oder es kann ein Austausch von Daten erfolgen.

Ab einem Zeitpunkt ts wird eine unidirektionale Datenübertragung eingeleitet. Dies kann beispielsweise dadurch erfolgen, dass das erste Kommunikationsgerät 1 ein spezielles Kommando an das zweite Kommunikationsgerät 2 sendet und in einen Betriebszustand erhöhter Eingangsempfindlichkeit übergeht, d. h. den Empfangsverstärker 5 aktiviert. Unterstützt das zweite Kommunikationsgerät 2 eine unidirektionale Datenübertragung, so sendet es wenigstens einmal ein Datenpaket MSG an das erste Kommunikationsgerät 1. Die Sendung der Datenpakete MSG wird zum Zeitpunkt t2 gestartet. Die Datenpakete MSG können mit einem Session Key verschlüsselt sein, der während der bidirektionalen Datenübertragung zwischen den beiden Kommunikationsgeräten 1 und 2 ausgehandelt wurde. Da vom ersten Kommunikationsgerät 1 keine Wiederholung der Übertragung eines fehlerhaft übertragenen Datenpakets MSG angefordert werden kann, werden vom zweiten Kommunikationsgerät 2 für die unidirektionale Datenübertragung vorzugsweise fehlerkorrigierte Codes eingesetzt, welche bis zu einem gewissen Grad die automatische Korrektur von Übertragungsfehlern ermöglichen.

Um zu verhindern, dass Datenpakete MSG verloren gehen, kann eine fortlaufende Nummerierung der Datenpakete MSG vorgesehen sein. Ebenso ist es möglich, die Datenpakete MSG mit einer Stromverschlüsselung (Streamcipher) zu versehen, da auch hiermit die Konsistenz der aufeinanderfolgenden Datenpakete MSG feststellbar ist. Weiterhin können Rolling-Codes zur Erkennung der Konsistenz der Datenpakete MSG eingesetzt werden.

Damit das erste Kommunikationsgerät 1 feststellen kann, dass das zweite Kommunikationsgerät 2 den sekundären Ansprechbereich 14 verlassen hat und somit auch keine unidirektionale Datenübertragung mehr möglich ist, kann vorgesehen sein, dass das zweite Kommunikationsgerät 2 die Datenpakete MSG in einem vorher vereinbarten Zeitabstand dt wiederholt sendet. Empfängt das erste Kommunikationsgerät 1 nach Ablauf des Zeitabstands dt kein weiteres Datenpaket MSG, so kann davon ausgegangen werden, dass sich das zweite Kommunikationsgerät 2 nicht länger innerhalb des sekundären Ansprechbereichs 14 befindet. Auch wenn keine Informationen zu übertragen sind kann daher vorgesehen sein, dass das zweite Kommunikationsgerät 2 Datenpakete MSG ohne Nutzinhalt versendet, um dem ersten Kommunikationsgerät 1 anzuzeigen, dass es sich noch innerhalb des sekundären Ansprechbereichs 14 befindet. In entsprechender Weise kann das erste Kommunikationsgerät 1 damit fortfahren, wiederholt die Anfrage REQ zu senden. Wenn sich das zweite Kommunikationsgerät 2 innerhalb des primären Ansprechbereichs 13 befindet, kann es die Anfrage REQ empfangen und beantworten und auf diese Weise die bidirektionale Datenübertragung starten.

Dies ist ab dem Zeitpunkt t3 der Fall. Zum Zeitpunkt t3 befindet sich das zweite Kommunikationsgerät 2 wieder innerhalb des primären Ansprechbereichs 13 und kann demgemäß die Anfrage REQ des ersten Kommunikationsgeräts 1 empfangen und mit der Antwort ANS beantworten. Im Rahmen der so gestarteten bidirektionalen Datenübertragung können dann Kommandos CDM vom ersten Kommunikationsgerät 1 gesendet und jeweils mit Antworten ANS vom zweiten Kommunikationsgerät 2 beantwortet werden.

Die in Fig. 4 ausschnittsweise dargestellte Datenübertragung zwischen den beiden Kommunikationsgeräten 1 und 2 kann nach dem vorstehend beschriebenen muster fortgesetzt werden, bis die darauf basierende Anwendung beendet ist.

Das erfindungsgemäße System eignet sich für eine Vielzahl von Anwendungen, von denen im Folgenden einige beispielhaft beschrieben werden.

Beispielsweise kann das erfindungsgemäße System im Zahlungsverkehr eingesetzt werden. Hierzu kann das erste Kommunikationsgerät 1 als ein kontaktloses Zahlungsverkehrsterminal ausgebildet sein. Das zweite Kommunikationsgerät 2 kann als ein portables kontaktloses Eingabeterminal ausgebildet sein, beispielsweise in Form eines Mobilfunktelefons mit einem NFC-Modul. Bei dieser Anwendung wird das zweite Kommunikationsgerät 2 zunächst in unmittelbare Nähe des ersten Kommunikationsgeräts 1 gebracht, so dass es sich innerhalb des primären Ansprechbereichs 13 befindet und eine bidirektionale Datenübertragung möglich ist. In dieser Konstellation kann eine Authentisierung zwischen den beiden Kommunikationsgeräten 1 und 2 durchgeführt werden und es können relevante Applikationsdaten wie beispielsweise der zu zahlende Betrag übertragen werden. Sind die vorgesehenen Daten zwischen den beiden Kommunikationsgeräten 1 und 2 ausgetauscht, so wird eine unidirektionale Datenübertragung vom zweiten Kommunikationsgerät 2 zum ersten Kommunikationsgerät 1 eingeleitet und der Benutzer aufgefordert, das zweite Kommunikationsgerät 2 vom ersten Kommunikationsgerät 1 zu entfernen.

Um den Zahlbetrag zu bestätigen und ggf. eine persönliche Geheimzahl (PIN) einzugeben, kann das zweite Kommunikationsgerät 2 dann vom Benutzer in die Hand genommen werden. Dabei wird der primäre Ansprechbereich 13 verlassen, so dass sich das zweite Kommunikationsgerät 2 innerhalb des sekundären Ansprechbereichs 14 befindet. In dieser Konstellation können sämtliche Benutzereingaben am zweiten Kommunikationsgerät 2 vorgenommen und verschlüsselt über die unidirektionale Kommunikationsverbindung vom zweiten Kommunikationsgerät 2 zum ersten Kommunikationsgerät 1 übertragen werden und damit die im primären Ansprechbereich 13 eingeleitete Zahlungsverkehrs-Transaktion zu Ende gebracht werden.

Alternativ zur unidirektionalen Übertragung der Benutzereingaben können diese im zweiten Kommunikationsgerät 2 zwischengespeichert werden und die unidirektionale Datenübertragung lediglich zur Anwesenheitserkennung des zweiten Kommunikationsgeräts 2 verwendet werden. In diesem Fall wird das zweite Kommunikationsgerät 2 nach Beendigung der Benutzereingabe wieder in die unmittelbare Nähe des ersten Kommunikationsgeräts 1 und damit in den primären Ansprechbereich 13 gebracht. Dann werden die zwischengespeicherten Daten im Rahmen einer bidirektionalen Datenübertragung vom zweiten Kommunikationsgerät 2 an das erste Kommunikationsgerät 1 übertragen und damit die Zahlungsverkehrs-Transaktion zu Ende gebracht.

Eine zweite Anwendungsmöglichkeit des erfindungsgemäßen Systems betrifft die Eingabe und ggf. die Auswertung biometrischer Daten, wie beispielsweise eines Fingerabdrucks. Dabei kann in analoger Weise vorgegangen werden wie für die Abwicklung der Zahlungsverkehrs-Transaktion beschrieben. Anstelle der PIN-Eingabe oder zusätzlich zur PIN-Eingabe, die für das Beispiel der Zahlungsverkehrs-Transaktion beschrieben wurde, erfolgt die Eingabe eines biometrischen Merkmals mit Hilfe des zweiten Kommunikationsgeräts 2.

Eine dritte Anwendungsmöglichkeit des erfindungsgemäßen Systems bezieht sich auf die Zugangskontrolle zu einem PC oder einem ähnlichen Gerät. Dabei ist das erste Kommunikationsgerät 1 als ein mit dem PC verbundenes RFID-Lesegerät ausgebildet. Das zweite Kommunikationsgerät 2 ist als ein portabler Datenträger ausgebildet, beispielsweise als ein Mobilfunktelefon mit einem NFC-Modul.

Das zweite Kommunikationsgerät 2 wird zunächst in unmittelbare Nähe des ersten Kommunikationsgeräts 1 gebracht, so dass es sich innerhalb des primären Ansprechbereichs 13 befindet. Dann wird eine Authentisierung zwischen den beiden Kommunikationsgeräten 1 und 2 durchgeführt und es werden relevante Applikationsdaten übertragen. Anschließend wird eine unidirektionale Datenübertragung vom zweiten Kommunikationsgerät 2 zum ersten Kommunikationsgerät 1 eingeleitet und der Benutzer aufgefordert, das zweite Kommunikationsgerät 2 vom ersten Kommunikationsgerät 1 zu entfernen. Beispielsweise verstaut der Benutzer das zweite Kommunikationsgerät 2 in einer Tasche seiner Kleidung. Dadurch wird das zweite Kommunikationsgerät 2 aus dem primären Ansprechbereich 13 entfernt, wobei es sich aber immer noch innerhalb des sekundären Ansprechbereichs 14 befindet. Die unidirektionale Kommunikationsverbindung wird weiterhin aufrechterhalten und dient als Anwesenheitskontrolle des zweiten Kommunikationsgeräts 2 innerhalb des sekundären Ansprechbereichs 14. Dies ist gleichbedeutend mit einer Anwesenheit des Benutzers in der Nähe des PCs.

Eine fortgesetzte Anwesenheitskontrolle kann zum Beispiel in der bereits beschriebenen Weise durch ein periodisches Aussenden von Datenpaketen durch das zweite Kommunikationsgerät 2 erfolgen. Solange das mit dem PC verbundene erste Kommunikationsgerät 1 diese Datenpakete empfängt wird eine Anwesenheit des Benutzers angenommen und demgemäß eine Nutzung des PCs zugelassen. Entfernt sich der Benutzer vom PC, so wird dadurch das zweite Kommunikationsgerät 2 aus dem sekundären Ansprechbereich 14 entfernt. Dies hat zur Folge, dass die vom zweiten Kommunikationsgerät 2 ausgesendeten Datenpakete vom ersten Kommunikationsgerät 1 nicht mehr empfangen werden können und somit die Abwesenheit des Benutzers registriert wird. Daraufhin kann beispielsweise die Tastatur des PCs blockiert und/ oder ein Bildschirmschoner aktiviert werden.

Zur erneuten Freigabe des PCs kann das zweite Kommunikationsgerät 2 in den primären Ansprechbereich 13 gebracht werden und erneut eine Authentisierung zwischen den beiden Kommunikationsgeräten 1 und 2 durchgeführt werden.

Eine vierte Anwendungsmöglichkeit des erfindungsgemäßen Systems betrifft die Fernsteuerung von elektronischen Geräten, Maschinen oder Anlagen. Die Fernsteuerung soll die Steuerung der elektronischen Geräte, Maschinen oder Anlagen mittels eines portablen intelligenten Geräts ermöglichen, wobei eine vorausgehende Authentisierung einen Missbrauch durch unberechtigte Dritte ausschließen soll. Außerdem ermöglicht die Authentisierung eine Protokollierung der jeweils das Gerät bedienenden Personen. Mit Hilfe des portablen Geräts kann dem Kontroll- oder Wartungspersonal auf besonders komfortable Weise eine Steuerung der Kontrolle und Wartung industriell eingesetzter Maschinen ermöglicht werden.

Bei der vierten Anwendungsmöglichkeit ist das erste Kommunikationsgerät 1 als ein mit dem elektronischen Gerät, der Maschine oder Anlage verbundenes RFID-Lesegerät ausgebildet. Das zweite Kommunikationsgerät 2 ist als ein portabler Datenträger, beispielsweise als ein Mobilfunktelefon mit einem NFC-Modul, ausgebildet.

Das zweite Kommunikationsgerät 2 wird zunächst in unmittelbare Nähe des ersten Kommunikationsgeräts 1 gebracht, so dass es sich innerhalb des primären Ansprechbereichs 13 befindet. Zu diesem Zeitpunkt kann eine Authentisierung zwischen den beiden Kommunikationsgeräten 1 und 2 durchgeführt werden und es können relevante Applikationsdaten übertragen werden. Beispielsweise kann eine maschinenindividuelle Tastaturbelegung an das zweite Kommunikationsgerät 2 übertragen werden.

Wenn die Übertragung der vorgesehenen Daten abgeschlossen ist, wird eine unidirektionale Datenübertragung vom zweiten Kommunikationsgerät 2 zum ersten Kommunikationsgerät 1 gestartet und der Benutzer aufgefordert, das zweite Kommunikationsgerät 2 vom ersten Kommunikationsgerät 1 zu entfernen. Beim Entfernen des zweiten Kommunikationsgeräts 2 wird der primäre Ansprechbereich 13 verlassen, so dass sich das zweite Kommunikationsgerät 2 innerhalb des sekundären Ansprechbereichs 14 befindet. Die in dieser Konstellation bestehende unidirektionale Kommunikationsverbindung kann zur Steuerung des elektronischen Geräts, der Maschine oder der Anlage eingesetzt werden. Zum Abmelden der Steuerfunktion kann das zweite Kommunikationsgerät 2 in den primären Ansprechbereich 13 zurückgebracht werden, um die eingeleitete Session im Rahmen einer bidirektionalen Datenübertragung zu beenden und ggf. Protokolldaten vom ersten Kommunikationsgerät 1 auf das zweite Kommunikationsgerät 2 zu übertragen.

Die Anwendungsmöglichkeiten des erfindungsgemäßen Systems sind nicht auf die vorstehende Aufzählung beschränkt, sondern es sind darüber hinaus noch viele weiteren Anwendungen möglich.

### Bezugszeichenliste

- 1: erstes Kommunikationsgerät
- 2: zweites Kommunikationsgerät
- 3: erste Geräteelektronik
- 4: erste Schnittstelle
- 5: Empfangsverstärker
- 6: erste Antenne
- 7: zweite Geräteelektronik
- 8: zweite Schnittstelle
- 9: zweite Antenne
- 10: Software
- 11: bidirektionaler Datenstrom
- 12: unidirektionaler Datenstrom
- 13: primärer Ansprechbereich
- 14: sekundärer Ansprechbereich
- 15: erste Trajektorie
- 16: zweite Trajektorie

## Patentansprüche

1. Kommunikationsgerät zur kontaktlosen Datenübertragung über ein Nahfeld, wobei das Kommunikationsgerät (1) über einen ersten Betriebsmodus verfügt, in dem es eine erste Eingangsempfindlichkeit für den Empfang von Signalen aufweist, die über das Nahfeld übertragenen werden, **dadurch gekennzeichnet, dass** das Kommunikationsgerät (1) über einen zweiten Betriebsmodus verfügt, in dem es eine gegenüber der ersten Eingangsempfindlichkeit erhöhte zweite Eingangsempfindlichkeit für den Empfang von Signalen aufweist, die über das Nahfeld übertragenen werden.

2. Kommunikationsgerät nach Anspruch 1, **dadurch gekennzeichnet, dass** es einen Empfangsverstärker (5) zur Verstärkung der empfangenen Signale ausweist, der im ersten Betriebsmodus deaktiviert und im zweiten Betriebsmodus aktiviert ist.

3. Kommunikationsgerät nach einem der vorhergehenden Ansprüche, **dadurch gekennzeichnet, dass** es im zweiten Betriebsmodus eine gegenüber dem ersten Betriebsmodus wenigstens vordoppelte Eingangsempfindlichkeit aufweist.

4. Kommunikationssystem mit einem ersten Kommunikationsgerät (1) gemäß einem der vorhergehenden Ansprüche und einem zweiten Kommunikationsgerät (2), das als ein aktiver Sender betreibbar ist, der ein Nahfeld erzeugt und über das Nahfeld Signale sendet.

5. Kommunikationssystem nach Anspruch 4, **dadurch gekennzeichnet, dass** das zweite Kommunikationsgerät (2) als passiver Sender betreibbar ist, der das vom ersten Kommunikationsgerät (1) erzeugte Nahfeld moduliert.

6. Kommunikationssystem nach einem der Ansprüche 4 oder 5, **dadurch gekennzeichnet, dass** im ersten Betriebsmodus des ersten Kommunikationsgeräts (1) eine bidirektionale Datenübertragung zwischen den Kommunikationsgeräten (1, 2) durchgeführt wird.

7. Kommunikationssystem nach einem der Ansprüche 4 bis 6, **dadurch gekennzeichnet, dass** im zweiten Betriebsmodus des ersten Kommunikationsgeräts (1) eine unidirektionale Datenübertragung vom zweiten Kommunikationsgerät (2) zum ersten Kommunikationsgerät (1) durchgeführt wird.

8. Verfahren zur kontaktlosen Datenübertragung zwischen einem ersten Kommunikationsgerät (1) und einem zweiten Kommunikationsgerät (2) über ein Nahfeld, wobei das erste Kommunikationsgerät (1) in einem ersten Betriebsmodus betrieben wird, wenn sich das zweite Kommunikationsgerät (2) innerhalb eines primären Ansprechbereichs (13) befindet, **dadurch gekennzeichnet, dass** das erste Kommunikationsgerät (1) in einem zweiten Betriebsmodus betrieben wird, in dem das erste Kommunikationsgerät (1) eine gegenüber dem ersten Betriebsmodus erhöhte Eingangsempfindlichkeit aufweist, wenn sich das zweite Kommunikationsgerät (2) innerhalb eines sekundären Ansprechbereichs (14) befindet.

9. Verfahren nach Anspruch 8, **dadurch gekennzeichnet, dass** zwischen den Kommunikationsgeräten (1, 2) eine bidirektionale Datenübertragung durchgeführt wird, wenn sich das zweite Kommunikationsgerät (2) innerhalb des primären Ansprechbereichs (13) befindet.

10. Verfahren nach einem der Ansprüche 8 oder 9, **dadurch gekennzeichnet, dass** zwischen den Kommunikationsgeräten (1, 2) eine unidirektionale Datenübertragung durchgeführt wird, wenn sich das zweite Kommunikationsgerät (2) innerhalb des sekundären Ansprechbereichs (14) befindet.

11. Verfahren nach einem der Ansprüche 8 bis 10, **dadurch gekennzeichnet, dass** das zweite Kommunikationsgerät (2) innerhalb des primären Ansprechbereichs (13) und innerhalb des sekundären Ansprechbereichs (14) auf unterschiedliche Weise betrieben wird.

12. Verfahren nach einem der Ansprüche 8 bis 11, **dadurch gekennzeichnet, dass** das zweite Kommunikationsgerät (2) innerhalb des primären Ansprechbereichs (13) in passiver Weise betrieben wird, wobei es seine Versorgungsspannung aus dem vom ersten Kommunikationsgerät (1) erzeugten Nahfeld bezieht und/oder Daten durch Modulation des vom ersten Kommunikationsgerät (1) erzeugten Nahfeldes sendet.

13. Verfahren nach einem der Ansprüche 8 bis 12, **dadurch gekennzeichnet, dass** das zweite Kommunikationsgerät (2) innerhalb des sekundären Ansprechbereichs (14) in aktiver Weise betrieben wird, wobei es Daten über ein von ihm erzeugtes Nahfeld übermittelt.

14. Verfahren nach einem der Ansprüche 8 bis 13, **dadurch gekennzeichnet, dass** vom ersten Kommunikationsgerät (1) wenigstens zeitweise wiederholt ein Signal gesendet wird, um festzustellen, ob sich das zweite Kommunikationsgerät (2) innerhalb des primären Ansprechbereichs (13) befindet.

15. Verfahren nach einem der Ansprüche 8 bis 14, **dadurch gekennzeichnet, dass** vom zweiten Kommunikationsgerät (2) wenigstens zeitweise wiederholt ein Signal gesendet wird, um festzustellen, ob sich das zweite Kommunikationsgerät (2) innerhalb des sekundären Ansprechbereichs (14) befindet.

16. Verfahren nach einem der Ansprüche 8 bis 15, **dadurch gekennzeichnet, dass** zwischen den Kommunikationsgeräten (1, 2) eine Authentisierung durchgeführt wird, während sich das zweite Kommunikationsgerät (2) innerhalb des primären Ansprechbereichs (13) befindet.

17. Verfahren nach einem der Ansprüche 8 bis 16, **dadurch gekennzeichnet, dass** eine Benutzereingabe in das zweite Kommunikationsgerät (2) durchgeführt wird, während sich das zweite Kommunikationsgerät (2) innerhalb des sekundären Ansprechbereichs (14) befindet.

18. Verfahren nach Anspruch 17, **dadurch gekennzeichnet, dass** von der Benutzereingabe abhängige Daten vom zweiten Kommunikationsgerät (2) an das erste Kommunikationsgerät (1) übermittelt werden.

19. Verfahren nach einem der Ansprüche 8 bis 18, **dadurch gekennzeichnet, dass** vom ersten Kommunikationsgerät (1) die Anwesenheit des zweiten Kommunikationsgeräts (2) im sekundären Ansprechbereich (14) überwacht wird und bei Entfernen des zweiten Kommunikationsgeräts (2) aus dem sekundären Ansprechbereich (14) vorgegebene Maßnahmen eingeleitet werden.

20. Verfahren nach einem der Ansprüche 8 bis 19, **dadurch gekennzeichnet, dass** vom zweiten Kommunikationsgerät (2) Steuerdaten an das erste Kommunikationsgerät (1) übermittelt werden, während sich das zweite Kommunikationsgerät (2) innerhalb des sekundären Ansprechbereichs (14) befindet.
